# FASCICULE DE BREVET EUROPEEN

(11) **EP 1 414 742 B1**
(45) Date de publication et mention de la délivrance du brevet: **05.04.2006**
(21) Numéro de dépôt: 02772458.2
(22) Date de dépôt: 26.07.2002
(51) Int. Cl.: C01B 13/02, E21B 37/06

(54) **PROCEDE DE DECOMPOSITION DU PEROXYDE D'HYDROGENE SOUS PRESSION ET DISPOSITIF POUR RECHAUFFER UN EQUIPEMENT**
VERFAHREN ZUR ZERSETZUNG VON WASSERSTOFFPEROXID UNTER HOHEN DRÜCKEN UND VORRICHTUNG ZUM ERWÄRMEN EINER AUSRÜSTUNG
METHOD FOR DECOMPOSING HYDROGEN PEROXIDE UNDER PRESSURE AND DEVICE FOR HEATING AN EQUIPMENT

(30) Priorité: 27.07.2001 FR 0110151
(43) Date de publication de la demande: 06.05.2004
(73) Titulaire: Arkema, 92800 Puteaux (FR)
(72) Inventeur: REQUIEME, Benoît, F-69390 Charly (FR)
(74) Mandataire: Hirsch & Associés
(86) Numéro de dépôt international: PCT/FR2002/002682
(87) Numéro de publication internationale: WO 2003/011751

(56) Documents cités:
- FR-A- 2 804 467
- US-A- 4 867 238
- US-A- 5 851 498
- BAYLESS J H: "HYDROGEN PEROXIDE: A NEW THERMAL STIMULATION TECHNIQUE" WORLD OIL, GULF PUBLISHING CO. HOUSTON, US, vol. 219, no. 5, mai 1998 (1998-05), pages 75-78, XP000799277 ISSN: 0043-8790 cité dans la demande
- BAYLESS J H: "HYDROGEN PEROXIDE APPLICATIONS FOR THE OIL INDUSTRY" WORLD OIL, GULF PUBLISHING CO. HOUSTON, US, vol. 221, no. 5, mai 2000 (2000-05), page 50,53 XP000969343 ISSN: 0043-8790

## Description

La présente invention concerne un procédé pour la décomposition du peroxyde d'hydrogène à pression élevée, en vue, notamment, d'utiliser la chaleur produite pour réchauffer un équipement, ainsi qu'un dispositif pour réchauffer un équipement, tel qu'un équipement pétrolier.

Il est connu que la décomposition du peroxyde d'hydrogène peut être catalysée à pression atmosphérique en utilisant certains métaux de transition tels que le fer, le chrome, l'argent, le platine, etc.

Le brevet US-A-4 867 238 décrit un procédé de décomposition du peroxyde d'hydrogène à pression élevée, dans lequel on décompose du peroxyde d'hydrogène à une pression élevé (=pression d'injection) en présence d'un catalyseur solide.

Le brevet US-A-5 851 498 montre un dispositif capable d'être utilisé pour réchauffer un équipement, comportant des chambres de réaction dites de chauffage, équipée de moyen d'alimentation en carburant, contenant un catalyseur comportant un oxyde mixte (spinelle) de cobalt et de chrome, ayant une forme apte en vue de réchauffer l'équipement et comportant des moyens d'évacuation des produits de combustion.

Par ailleurs, l'article intitulé "Hydrogen peroxide applications for the oil industry" de Jack H. Bayless, paru dans la revue World Oil en mai 2000, divulgue la mise à profit, dans l'industrie du pétrole, de l'exothermie de la décomposition du peroxyde d'hydrogène en présence d'un catalyseur pour produire de la chaleur en vue de réchauffer des équipements. Cet article ne donne cependant pas d'informations sur la nature du catalyseur utilisé. Il ne décrit pas non plus de dispositif rendant possible dans la pratique une telle utilisation de la décomposition du peroxyde d'hydrogène.

Cependant, pour l'application envisagée, la réaction de décomposition du peroxyde d'hydrogène doit être réalisée généralement sous pression et il a été constaté que les catalyseurs solides tels que l'oxyde de fer, l'argent et le platine, sous forme de toile métallique, sont inefficaces et/ou se désactivent rapidement à pression élevée. De plus, les catalyseurs usuels tels que les dérivés solubles de Cr^{III}, Fe^{II} ou Fe^{III}, utilisés généralement sous forme liquide, sont difficiles à mettre en oeuvre dans un procédé fonctionnant en continu. Ils doivent être injectés séparément du peroxyde d'hydrogène pour éviter la décomposition du peroxyde d'hydrogène dans la tuyauterie d'alimentation et sont rapidement inefficaces parce qu'ils sont évacués de l'installation par l'oxygène et/ou la vapeur produite par la réaction.

On recherche donc des catalyseurs solides efficaces, mêmes à des pressions élevées.

Selon un premier aspect, l'invention vise un procédé permettant la décomposition du peroxyde d'hydrogène dans des conditions de pression élevée, en particulier à des pressions supérieures à 20 bars.

L'invention a pour objet un procédé de décomposition du peroxyde d'hydrogène à pression élevée, dans lequel on décompose du peroxyde d'hydrogène à une pression d'au moins 20 bars au moyen d'un catalyseur solide comprenant (comme constituant actif principal) au moins un élément choisi dans le groupe constitué par le manganèse, le vanadium, le palladium, et leurs mélanges.

Selon un mode de réalisation, la pression est d'au moins 80 bars.

Selon un mode de réalisation, le catalyseur comprend du manganèse et/ou du palladium.

Selon un mode de réalisation, le catalyseur comprend du manganèse partiellement oxydé.

Selon un mode de réalisation, le catalyseur est supporté sur un matériau support, inerte dans les conditions de réaction.

Selon un mode de réalisation le catalyseur est un catalyseur supporté à base de palladium seul ou en mélange avec un ou plusieurs éléments choisis parmi le platine, l'or et l'iridium.

Selon un mode de réalisation, le peroxyde d'hydrogène est sous forme de solution aqueuse.

Selon un mode de réalisation, la solution aqueuse contient moins de 90% et de préférence moins de 70% en poids de peroxyde d'hydrogène.

Selon un mode de réalisation, la solution est stabilisée.

Selon un mode de réalisation, le procédé selon l'invention est utile pour produire de la chaleur, de l'oxygène et/ou de la vapeur.

Selon un second aspect, l'invention a donc pour but de proposer un dispositif permettant de mettre à profit l'exothermie de la décomposition du peroxyde d'hydrogène pour réchauffer des équipements.

L'invention a donc aussi pour objet un procédé pour réchauffer un équipement, comportant
- une chambre de décomposition d'un réactif
   - équipée de moyens d'alimentation en réactif,
   - contenant un catalyseur solide comportant au moins un élément choisi dans le groupe constitué par le manganèse, le vanadium, le palladium et leurs mélanges, et
   - ayant une forme apte à coopérer avec celle de l'équipement en vue de le réchauffer; et
- des moyens d'évacuation des produits résultant de la décomposition.

Selon un mode de réalisation, il comporte en outre des moyens d'injection d'un fluide de balayage à l'intérieur de la chambre de décomposition.

Selon un mode de réalisation, la paroi intérieure de la chambre de décomposition est revêtue d'un matériau résistant à des températures élevées.

Selon un mode de réalisation, le catalyseur comprend du manganèse et/ou du palladium.

Selon un mode de réalisation, le dispositif est mis en oeuvre sous une pression d'au moins 20 bars, avantageusement au moins 80 bars.

D'autres caractéristiques et avantages de l'invention apparaîtront à la lecture de l'exposé qui suit et qui est donné en référence aux dessins dans lesquels:
- la Figure 1 représente schématiquement un premier mode de réalisation du dispositif selon l'invention, utilisable pour l'élimination des dépôts d'hydrates de gaz ou de paraffines dans une conduite de transport d'hydrocarbures;
- la Figure 2 représente schématiquement un deuxième mode de réalisation du dispositif selon l'invention, utilisable pour l'élimination des dépôts d'hydrates de gaz ou de paraffines dans une tête de puits sous-marin de production d'hydrocarbures;
- la Figure 3 représente l'évolution de la température en fonction du temps, lors de la décomposition à pression élevée du peroxyde d'hydrogène avec différentes quantités de catalyseur au palladium supporté;
- la Figure 4 représente l'évolution de la température en fonction du temps, lors de la décomposition à pression élevée du peroxyde d'hydrogène avec un catalyseur au palladium supporté et sous différentes pressions;
- la Figure 5 représente l'évolution de la température en fonction du temps, lors de la décomposition à pression élevée du peroxyde d'hydrogène avec un catalyseur au palladium supporté et un cassage de la pression en fin de réaction;
- la Figure 6 représente l'évolution de la température en fonction du temps, lors de la décomposition à pression élevée du peroxyde d'hydrogène avec un catalyseur au palladium supporté et avec des recyclages successifs du catalyseur;
- la Figure 7 représente l'évolution de la température en fonction du temps, lors de la décomposition à pression élevée du peroxyde d'hydrogène avec un catalyseur au manganèse, puis avec un catalyseur au manganèse recyclé;
- la Figure 8 représente l'évolution de la température en fonction du temps, lors de la décomposition à pression élevée du peroxyde d'hydrogène avec un catalyseur massique à base de manganèse préalablement oxydé (partiellement), sous différentes pressions et avec des solutions de peroxyde d'hydrogène de concentrations différentes;
- la Figure 9 représente l'évolution de la température en fonction du temps, lors de la décomposition à pression élevée du peroxyde d'hydrogène avec un catalyseur massique au vanadium, neuf ou recyclé, sous différentes pressions et avec des solutions de peroxyde d'hydrogène de concentrations différentes.

### EXPOSE DETAILLE DE L'INVENTION

### Procédé selon l'invention

Dans le procédé selon l'invention, on décompose un réactif qui est le peroxyde d'hydrogène à une pression d'au moins 20 bars au moyen d'un catalyseur solide comprenant au moins un élément choisi dans le groupe constitué par le manganèse, le vanadium, le palladium et leurs mélanges. Ces éléments forment le constituant actif principal du catalyseur, qui peut comprendre classiquement d'autres éléments.

Cette décomposition peut être mise à profit pour générer de la chaleur, de l'oxygène et/ou de la vapeur d'eau dans des conditions de pression élevée.

Comme catalyseurs préférés, on utilise les catalyseurs comprenant du palladium et/ou du manganèse.

Le catalyseur peut être sous forme de poudre. Cependant, dans l'application envisagée, pour éviter une augmentation de la perte de charge liée au passage du peroxyde d'hydrogène au travers du catalyseur et faciliter l'évacuation des produits de réaction, il est préférable d'utiliser un catalyseur dont la taille des particules est supérieure à 0.1 mm, de préférence comprise entre 0.5 mm et 50 mm et plus particulièrement entre 1 mm et 10 mm.

Le catalyseur peut aussi être supporté sur un matériau support, inerte dans les conditions de réaction, bien connu de l'homme du métier et qui peut être, à titre d'exemple, de l'alumine, de la silice, un silicoaluminate, une zéolithe ou une structure métallique. Ce support peut se trouver sous forme de bille, de pastille ou d'extrudât. On peut également avantageusement utiliser un matériau employé comme garnissage ou comme mélangeur statique.

De préférence, ce support est principalement constitué d'oxyde d'aluminium, de silice ou d'un mélange des deux.

La teneur en catalyseur du support est alors généralement comprise entre 0.1% et 10%, de préférence entre 0.5% et 5%, par rapport à la masse totale de support.

Le catalyseur supporté ou non, peut être préparé suivant toute méthode connue de l'homme du métier.

Le peroxyde d'hydrogène est généralement sous forme de solution aqueuse.

De préférence, la solution aqueuse contient moins de 90% et, en particulier, moins de 70% en poids de peroxyde d'hydrogène, par rapport au poids total de la solution.

La solution aqueuse contient en général des stabilisants, tels que par exemple à base de pyrophosphate, phosphate et dérivé d'étain, et/ou à base de dérivé d'acides phosphoniques. De telles solutions sont connues.

Le procédé selon l'invention est efficace à des pressions élevées, ce qui est surprenant si on considère que les catalyseurs classiques mis en oeuvre à pression atmosphérique (notamment oxyde de fer) sont totalement inefficaces à des pressions de 20 bars. Le procédé selon l'invention ouvre de nouvelles voies dans les pressions élevées, jamais explorées jusqu'ici.

Le procédé est aussi efficace à des pressions par exemple supérieures à 80 bars, voire supérieures à 160 bars.

### Dispositif selon l'invention

Le dispositif selon l'invention peut être utilisé, en particulier, pour éliminer des dépôts d'hydrates de gaz ou de paraffines dans des équipements de forage ou de production, ou de transport d'hydrocarbures, par production de chaleur par décomposition d'un réactif tel que du peroxyde d'hydrogène ou de l'hydrazine, de préférence du peroxyde d'hydrogène.

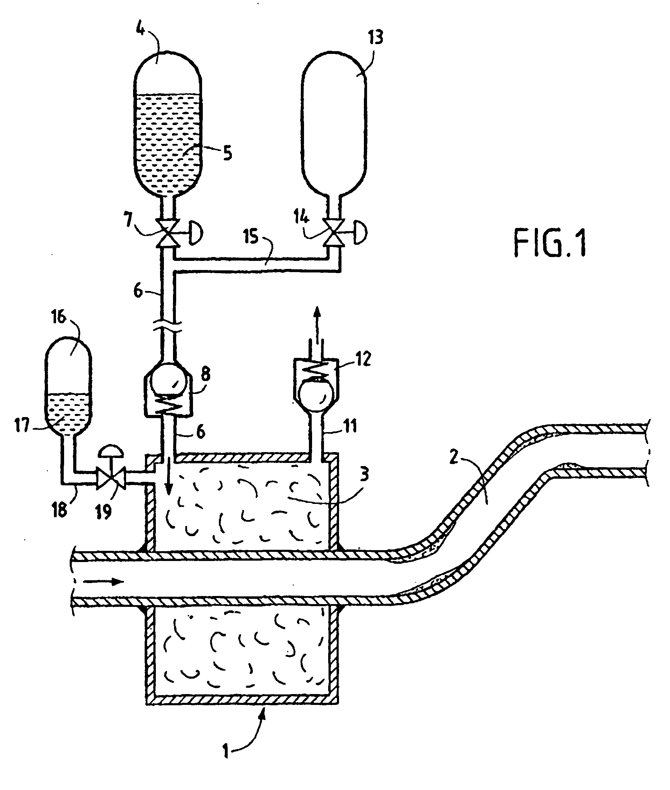

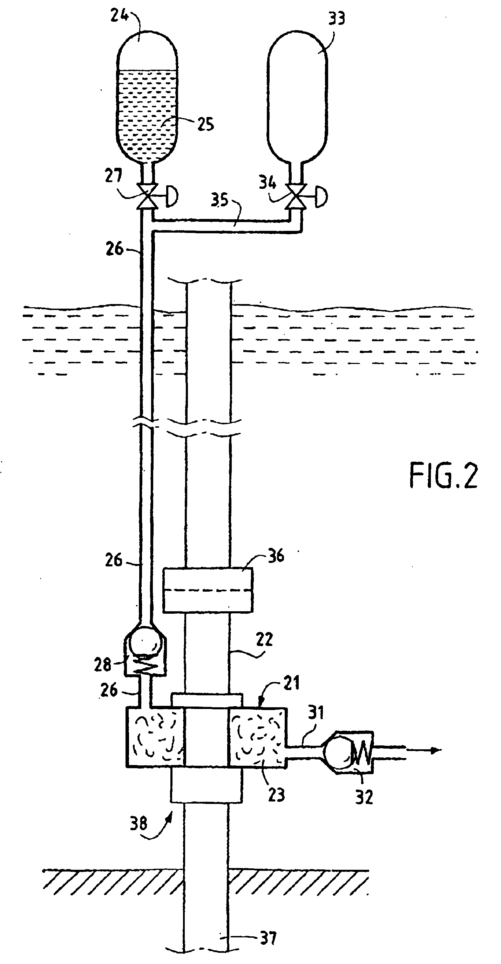

C'est dans le cadre de cette application que le dispositif selon l'invention va maintenant être décrit en se référant aux Figures 1 et 2 annexées, mais il va de soi que la description qui suit peut convenir à d'autres applications.

La figure 1 représente schématiquement un premier mode de réalisation du dispositif selon l'invention qui comporte une chambre 1 de décomposition d'un réactif qui peut être montée de manière à être en contact avec une canalisation 2 de transport d'un mélange d'hydrocarbures liquides et gazeux.

Cette chambre 1 de décomposition a généralement des parois intérieures revêtues d'un matériau résistant à des températures élevées. Elle contient un catalyseur 3 solide comportant au moins un élément choisi dans le groupe constitué par le manganèse, le vanadium, le palladium et leurs mélanges.

De préférence, on choisit un catalyseur solide 3 qui comporte du palladium et/ou du manganèse.

Le dispositif comprend aussi des moyens d'alimentation en un réactif, tel que le peroxyde d'hydrogène, qui comportent un réservoir 4 de réactif 5 relié par une tubulure 6 à la chambre 1 de décomposition au travers d'une vanne 7 à ouverture réglable et d'un clapet 8 anti-retour.

Pour éliminer les dépôts d'hydrates de gaz ou de paraffines présents sur la paroi intérieure de la canalisation 2, la vanne 7 est progressivement ouverte, de manière à injecter du réactif dans la chambre 1 de décomposition.

Au contact du catalyseur 3, le réactif se décompose en produisant une forte quantité de chaleur qui est transmise par la chambre 1 de décomposition à la canalisation 2 et réchauffe le mélange d'hydrocarbures qui circule dans cette canalisation 2, par l'intermédiaire de la paroi de cette dernière.

A leur tour, les hydrocarbures réchauffent et dissolvent les dépôts d'hydrates de gaz ou de paraffines en aval de la partie de canalisation sur laquelle est montée la chambre 1 de décomposition.

La quantité de chaleur apportée aux hydrocarbures en circulation est réglée par action sur l'ouverture de la vanne 7 pendant un temps plus ou moins long.

Les produits de la décomposition du réactif ne peuvent pas remonter dans le réservoir 4 grâce au clapet 8 anti-retour d'entrée et sont partiellement évacués par la canalisation 11 de sortie au travers du clapet 12 anti-retour de sortie.

Le dispositif selon l'invention comporte aussi des moyens d'injection d'un fluide de balayage tel que de l'azote pour éliminer les produits de la décomposition du réactif dans la chambre 1 de décomposition.

Ces moyens d'injection d'un fluide de balayage comprennent un ballon 13 de stockage d'azote sous pression relié à la tubulure 6 en aval de la vanne 7 par une tubulure 15 au travers d'une vanne 14 d'admission d'azote à ouverture réglable.

Après une injection de réactif dans la chambre 1 de décomposition, la vanne 7 est fermée et la vanne 14 d'admission d'azote est ouverte, pour produire un courant d'azote à l'intérieur de la chambre 1 qui entraîne les produits résiduels de la décomposition du réactif.

Le dispositif selon l'invention peut éventuellement aussi comporter des moyens d'injection d'un adjuvant liquide pour faciliter ou accélérer la réaction de décomposition du réactif. Ces moyens d'injection d'un adjuvant liquide sont particulièrement utiles lorsque le dispositif selon l'invention est utilisé sous une forte pression hydrostatique, afin d'amorcer la réaction de décomposition.

Lorsque le réactif est du peroxyde d'hydrogène, pour initier la réaction de décomposition du peroxyde d'hydrogène, on peut aussi injecter simultanément à l'injection de peroxyde d'hydrogène, de l'azote, afin de créer dans la chambre de décomposition 1 un volume de gaz qui facilite l'expansion de l'oxygène libéré par la réaction de décomposition du peroxyde d'hydrogène.

Pour limiter les volumes de réactif injectés dans le cas de canalisations de grandes longueurs, on peut utiliser l'azote comme fluide pousseur du réactif.

Le dispositif peut être utilisé notamment à des pressions élevées, par exemple au moins 20 bars

La Figure 2 représente schématiquement un deuxième mode de réalisation du dispositif selon l'invention, qui comporte une chambre 21 de décomposition montée de manière étanche autour d'un tube 22 prolongateur qui relie une tête 38 de puits 37 sous-marin de production d'hydrocarbures à la surface de la mer, tube prolongateur qui comporte un obturateur 36 de sécurité.

La chambre 21 de décomposition est remplie d'un catalyseur promoteur de la réaction de décomposition du réactif et comportant au moins un élément choisi dans le groupe constitué par le manganèse, le vanadium, le palladium et leurs mélanges.

Le dispositif comprend aussi des moyens d'alimentation en réactif qui comportent un réservoir 24 de réactif 25 relié par une tubulure 26 à la chambre 21 de décomposition au travers d'une vanne 27 à ouverture réglable et d'un clapet 28 anti-retour.

Pour éliminer les dépôts d'hydrates de gaz ou de paraffines présents sur la paroi intérieure du tube 22 prolongateur et la paroi des éléments montés en aval du dispositif selon l'invention, la vanne 27 est progressivement ouverte de manière à injecter du réactif dans la chambre 21 de décomposition. Au contact du catalyseur 23, le réactif se décompose en produisant une forte quantité de chaleur qui réchauffe les hydrocarbures qui circulent dans le tube 22 prolongateur, par l'intermédiaire de la paroi dudit tube prolongateur.

A leur tour, les hydrocarbures réchauffent et dissolvent les dépôts d'hydrates de gaz ou de paraffines en aval de la partie du tube 22 prolongateur sur laquelle est montée la chambre 21 de décomposition.

La quantité de chaleur apportée aux hydrocarbures en circulation est réglée par action sur l'ouverture de la vanne 27 pendant un temps plus ou moins long.

Les produits de la décomposition du peroxyde d'hydrogène ne peuvent pas remonter dans le réservoir 24 grâce au clapet 28 anti-retour d'entrée et sont partiellement évacués par la canalisation 31 de sortie au travers du clapet 32 anti-retour de sortie.

Le dispositif selon l'invention comporte aussi des moyens d'injection d'un fluide de balayage tel que l'azote, pour éliminer les produits de la décomposition du réactif dans la chambre 21 de décomposition.

Ces moyens d'injection d'un fluide de balayage comprennent un ballon 33 de stockage d'azote sous pression relié à la tubulure 26, en aval de la vanne 27 par une tubulure 35 au travers d'une vanne 34 d'admission d'azote à ouverture réglable.

Après une injection de réactif dans la chambre 21 de décomposition, la vanne 27 est fermée et la vanne 34 d'admission d'azote est ouverte pour produire un courant d'azote à l'intérieur de la chambre 21 qui entraîne les produits résiduels de la décomposition du réactif.

Ainsi, grâce au dispositif selon l'invention, les dépôts d'hydrates de gaz ou de paraffines peuvent être retirés des parois des équipements de production d'hydrocarbures notamment par grands fonds sans perturber la production.

Un autre avantage du dispositif selon l'invention est sa simplicité de montage et de conception qui le rendent très fiable.

Un autre avantage encore est la possibilité de réchauffer des équipements pétroliers sous des pressions élevées, donc à des profondeurs élevées, pouvant dépasser 3000 m.

### Exemples

Les exemples suivants illustrent la présente invention sans toutefois en limiter la portée.

### Appareillage et conditions de test

Dans ces exemples, les essais ont été réalisés dans un autoclave de 100 ml en inox, dans lequel a été placée une enveloppe en verre afin de limiter la perte de chaleur par diffusion dans la masse du réacteur.

Le réactif, du peroxyde d'hydrogène, est introduit par l'intermédiaire d'une ampoule de coulée de 200 ml, pressurisée. Le réacteur est équipé par ailleurs d'un capteur de pression, d'une sonde de température, d'une soupape de sécurité tarée à 230 bars et d'une vanne reliée à un évent.

En début d'essai, le catalyseur solide est introduit dans le réacteur, puis l'autoclave est pressurisé par injection d'azote. Le peroxyde d'hydrogène (10 ml) est introduit dans l'ampoule de coulée qui est également pressurisée avec de l'azote à une pression légèrement supérieure à celle du réacteur (d'environ 25 bars). L'ouverture de la vanne reliant l'ampoule de coulée au réacteur permet d'injecter de manière presque instantanée le peroxyde d'hydrogène dans le réacteur contenant le catalyseur. La réaction est suivie par la montée en température. La température initiale du réacteur est de 20±1°C.

Les essais ont été effectués avec une solution aqueuse de peroxyde d'hydrogène stabilisé (le stabilisant est à base de pyrophosphate, phosphate et dérivé d'étain) comportant 35% de peroxyde d'hydrogène en poids, par rapport au poids total de la solution.

Les essais ont été réalisés principalement avec des catalyseurs en poudre.

Différentes méthodes ont été utilisées pour évaluer la désactivation des catalyseurs:
- conserver le milieu réactionnel dans le réacteur et injecter une seconde fois 10 ml de solution de peroxyde d'hydrogène à 35%. Ceci revient donc à effectuer la réaction avec une solution de peroxyde d'hydrogène plus diluée (environ 20%);
- recycler le catalyseur en le séparant du liquide par décantation et recommencer la réaction de la même manière qu'avec du catalyseur neuf (injection de 10 ml de solution de peroxyde d'hydrogène à 35%).

### Exemple 1

### Catalyseur au palladium - effet de la masse de catalyseur

Dans cet exemple, on a réalisé plusieurs essais de décomposition de 10 ml de peroxyde d'hydrogène en solution aqueuse à 35% en utilisant comme catalyseur, du palladium supporté à 2% en poids sur de l'alumine, commercialisé par la société ENGELHARD et se présentant sous la forme d'une poudre fine (diamètre moyen des particules: 40 µm).

Les essais ont été réalisés avec 100, 500 puis 1000 mg de catalyseur.

La pression initiale était de 80 bars. Le catalyseur a été renouvelé à chaque essai de manière à s'affranchir des phénomènes potentiels de désactivation.

On a mesuré l'évolution de la température en fonction du temps.

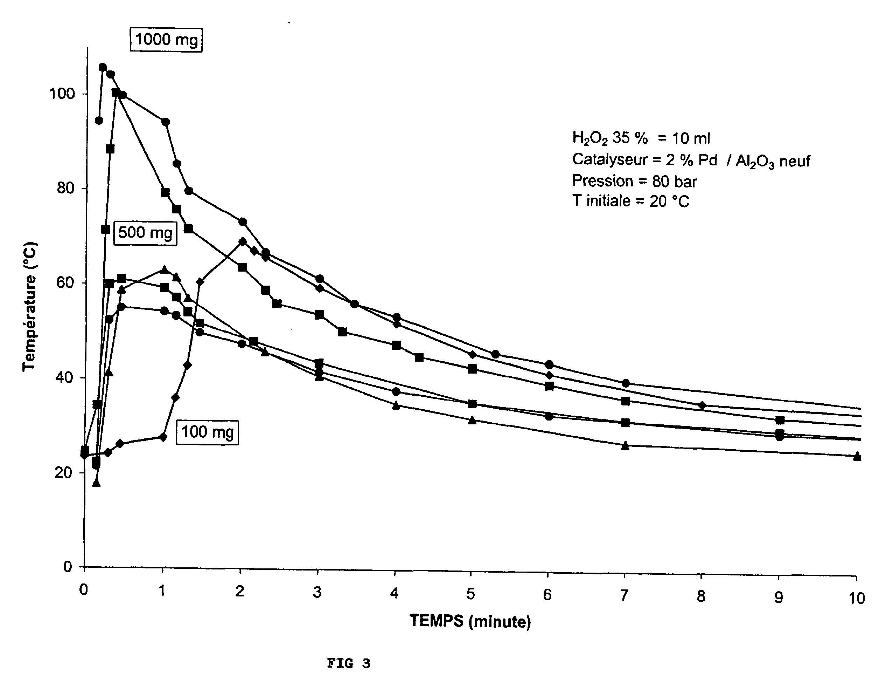

Les résultats apparaissent sur la Figure 3.

On constate que dans tous les cas, la réaction s'amorce rapidement. Avec 100 mg de catalyseur, il semble y avoir une légère période d'induction (environ 1 minute), avant que la réaction ne démarre. Avec 500 ou 1000 mg, la décomposition est pratiquement immédiate.

Les différents essais réalisés avec une même masse de catalyseur montrent que les résultats sont reproductibles.

### Exemple 2

### Catalyseur au palladium - effet de la pression

Dans cet exemple, on a réalisé plusieurs essais de décomposition d'une solution aqueuse de peroxyde d'hydrogène à 35%, avec une pression initiale de 80 bars dans un premier temps, puis à 160 bars.

Le catalyseur était le même qu'à l'exemple 1. La masse de catalyseur était de 500 mg. Le catalyseur a été renouvelé à chaque essai.

On a mesuré l'évolution de la température en fonction du temps.

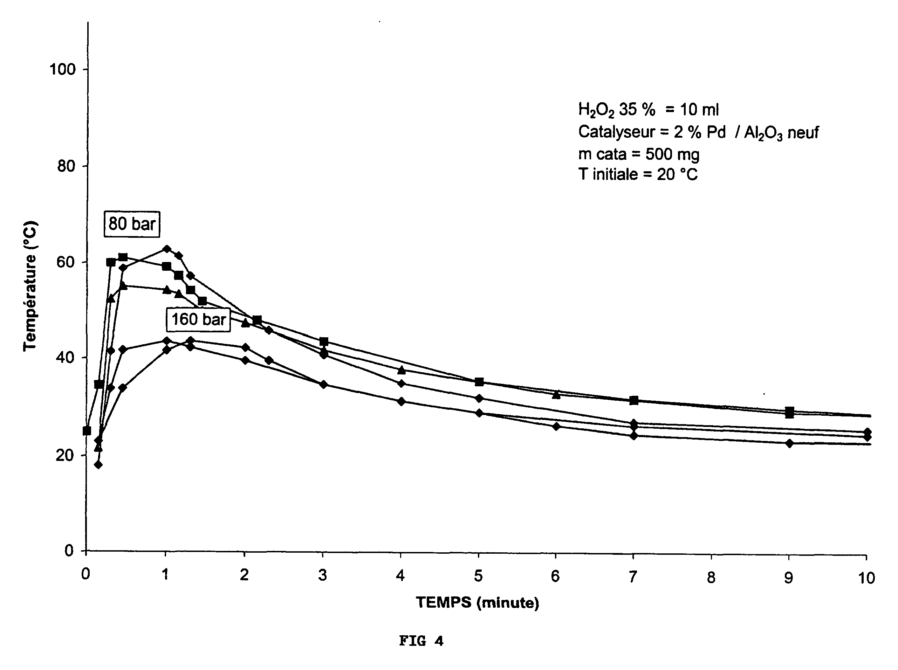

Les résultats apparaissent sur la Figure 4.

On constate qu'avec ce catalyseur la réaction de décomposition du peroxyde d'hydrogène a encore lieu à 160 bars, même si la pression a un effet un peu négatif sur la réaction.

On a alors, dans un autre essai, mis en oeuvre la réaction à 160 bars, puis, en fin de réaction on a abaissé la pression à 1 bar.

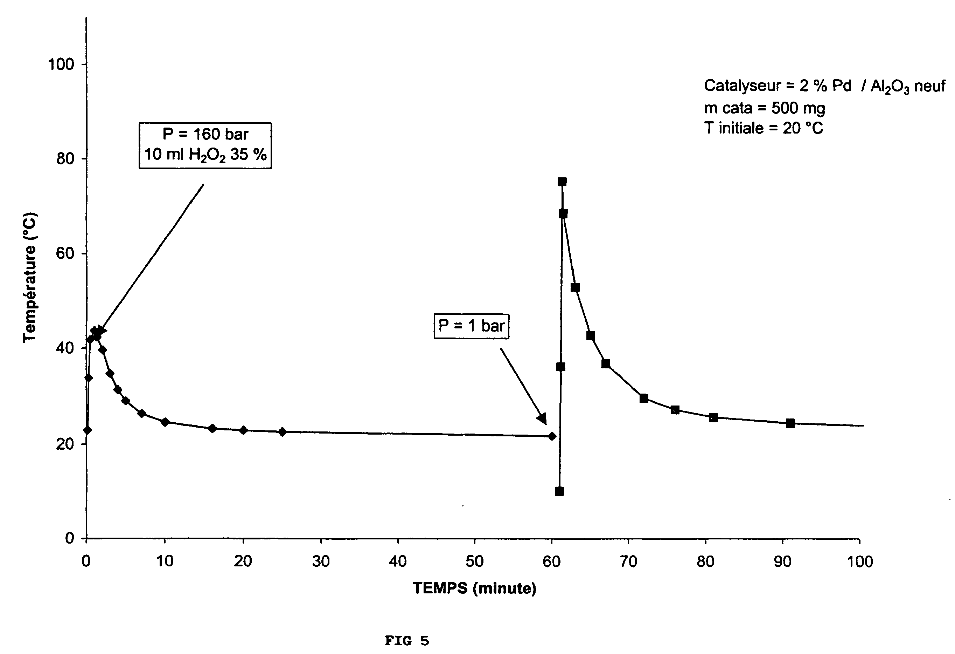

L'évolution de la température en fonction du temps est visible sur la Figure 5.

On constate que sous pression élevée, même si la réaction reste éventuellement incomplète, le catalyseur n'est pas empoisonné de manière irréversible, puisque la réaction redémarre lorsque l'on diminue notablement la pression.

### Exemple 3

### Catalyseur au palladium - effet du recyclage du catalyseur

Dans cet exemple, on a fait subir à 500 mg du catalyseur de l'exemple 1, 6 recyclages en le séparant du liquide par décantation et en recommençant la réaction de la même manière qu'avec du catalyseur neuf.

A chaque fois, la réaction est réalisée sous une pression initiale de 80 bars, avec une solution aqueuse de peroxyde d'hydrogène à 35%.

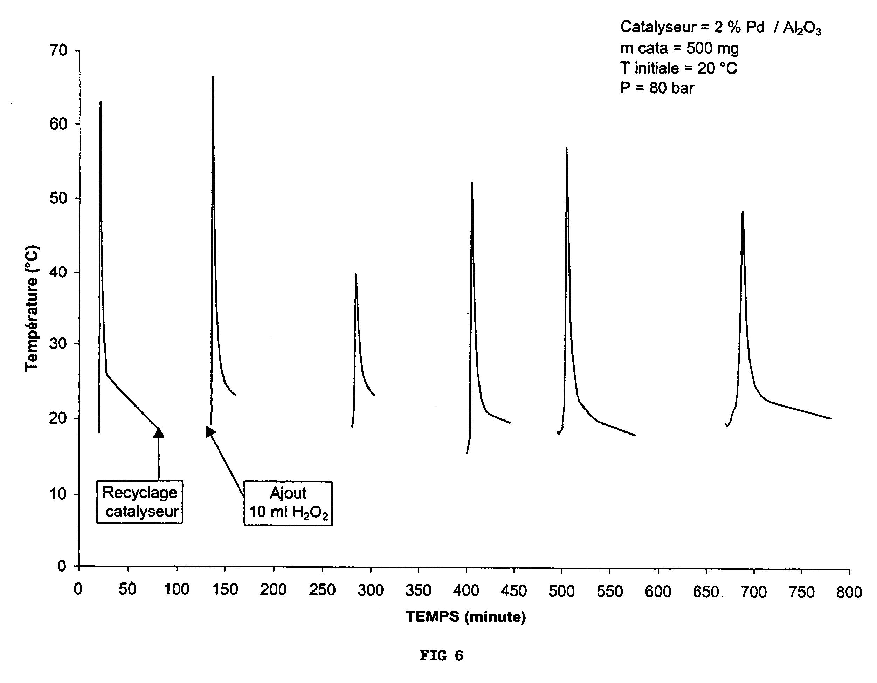

L'évolution de la température en fonction du temps, après chaque ajout de 10 ml de peroxyde d'hydrogène à 35%, est visible sur la Figure 6.

On constate que la désactivation du catalyseur semble très peu importante.

### Exemple 4

### Catalyseur: manganèse

Dans cet exemple, on a testé l'efficacité du manganèse pour ce qui est de la décomposition de 10 ml d'une solution aqueuse de peroxyde d'hydrogène à 35%.

La réaction a été conduite à chaque fois avec 1 g de catalyseur en poudre, non supporté, sous une pression initiale de 80 bars.

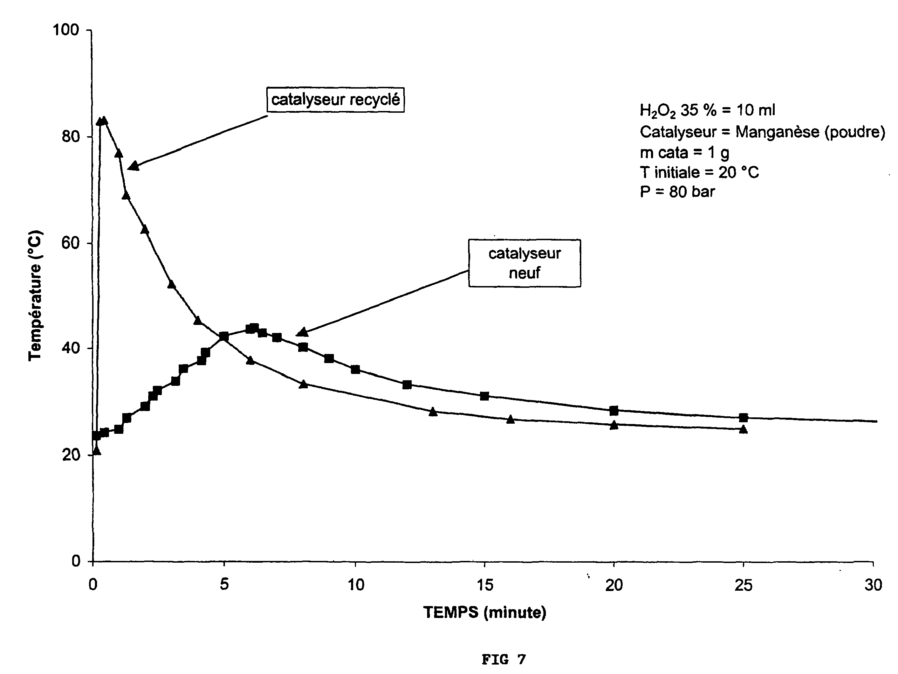

L'évolution de la température en fonction du temps est représentée sur la Figure 7.

On constate que l'activité du catalyseur recyclé est supérieure à celle du catalyseur neuf.

Des résultats similaires ont été observés au cours d'essais avec 0,5 g de catalyseur en poudre.

D'autres essais ont été effectués avec 1 g de manganèse préalablement oxydé et 10 ml d'une solution aqueuse de peroxyde d'hydrogène à 35% et 10 ml d'une solution aqueuse stabilisée de peroxyde d'hydrogène à 20% en poids par rapport au poids total de la solution.

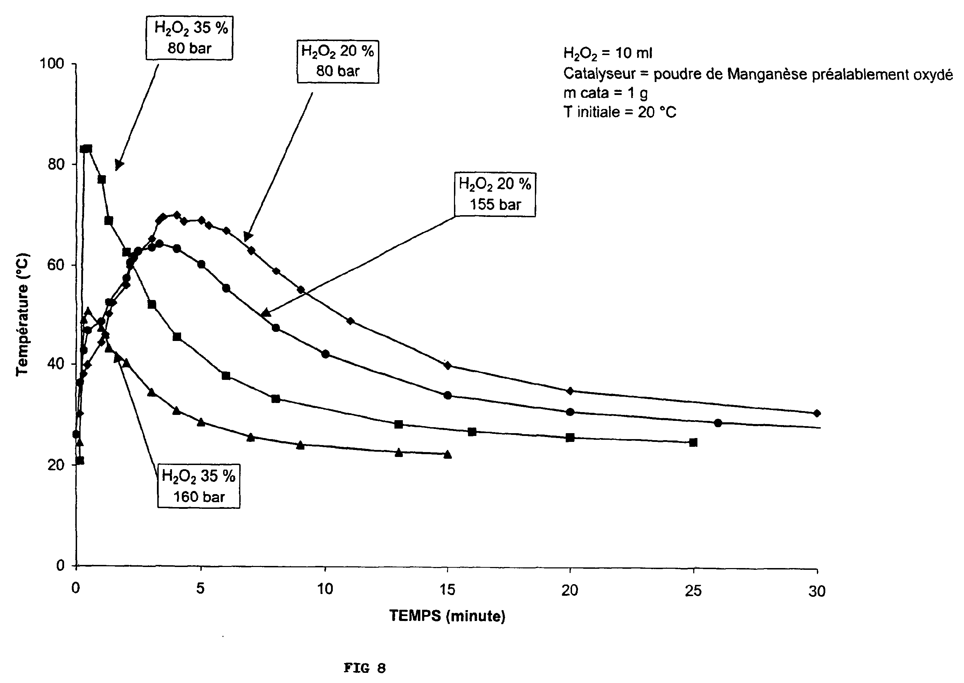

Les résultats sont visibles sur la Figure 8.

On constate que le catalyseur reste actif même à 160 bars, quelle que soit la concentration de la solution aqueuse de peroxyde d'hydrogène.

### Exemple 5

### Catalyseur: vanadium

Dans cet exemple, on a testé l'efficacité du vanadium pour ce qui est de la décomposition de 10 ml d'une solution aqueuse de peroxyde d'hydrogène à 35%.

La réaction a été conduite à chaque fois avec 0,5 g de catalyseur en poudre, non supporté, sous une pression initiale de 80 et 160 bars.

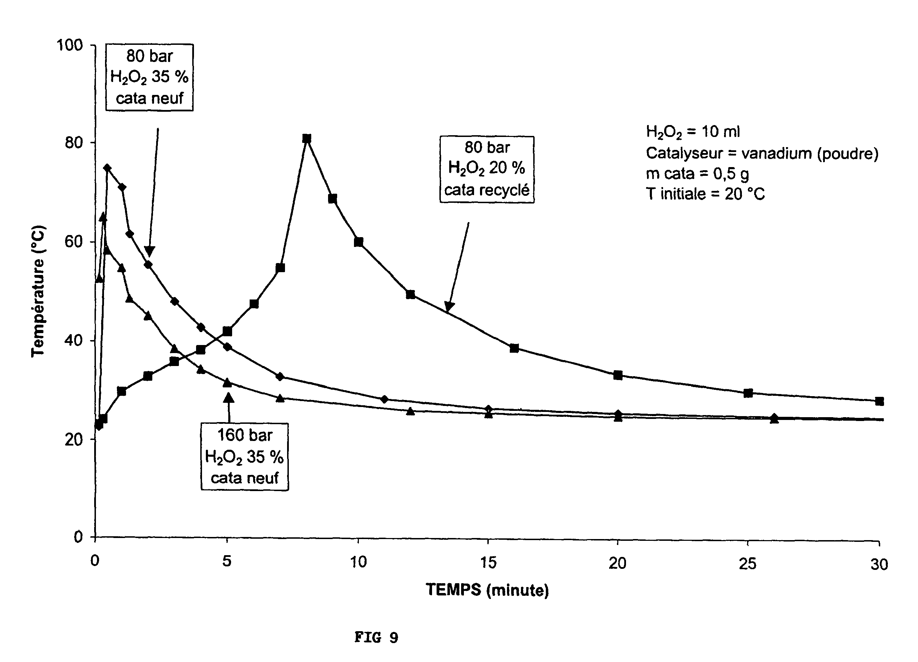

L'évolution de la température en fonction du temps est représentée sur la Figure 9.

La pression a un effet négatif moins marquée que pour le manganèse ou le palladium.

Un essai a été effectué en réinjectant du peroxyde d'hydrogène dans le réacteur, sans soutirer l'eau issue de la réaction de décomposition précédente (ce qui revient à faire la réaction avec peroxyde d'hydrogène à 20%). Dans ce cas, il y a une période d'induction de quelques minutes jusqu'au pic de température.

### Exemple comparatif 1

### Catalyseur: Oxyde de fer

Dans cet exemple, on a testé l'efficacité d'un catalyseur massique principalement constitué d'oxyde de fer pour ce qui est de la décomposition de 10 ml d'une solution aqueuse de peroxyde d'hydrogène à 35%. Ce catalyseur, commercialisé par SÜD CHEMIE sous le nom de Styromax-4, contient également du molybdène (<5% MoO₃), du calcium (<5% CaOH) et du potassium (13% K₂CO₃).

La réaction a été conduite avec 1 g de catalyseur broyé, sous une pression initiale de 20 bars.

Aucune augmentation de température n'a été détectée à l'issue de cet essai (variation de température inférieure à 5°C).

### Exemple comparatif 2

### Catalyseur: Toile de Platine

Dans des conditions analogues à l'exemple comparatif 1 nous avons testé l'efficacité d'une toile métallique formée de files de platine (1,2 g, 100 mesh).

Aucune augmentation de température n'a été détectée à l'issue de cet essai (variation de température inférieure à 5°C).

### Exemple comparatif 3

### Catalyseur: Argent

Dans des conditions analogues à l'exemple comparatif 1, excepté une pression initiale de 80 bars et une masse de catalyseur de 0,5 g, nous avons testé l'efficacité d'un catalyseur à base d'argent, supporté sur alumine, contenant 15,7% Ag et 0,1% Ce en poids.

Lorsque le catalyseur est neuf, on obtient une température maximale 43°C (élévation de température de 22°C), observée après 3 min de réaction. Cependant, Après le premier recyclage du catalyseur, l'injection de 10 ml de peroxyde d'hydrogène 35% ne provoque plus qu'une élévation de température maximale de 5°C, observée après 12 min de réaction.

Ce catalyseur à base d'argent se désactive donc très rapidement.

## Revendications

1. Procédé de décomposition du peroxyde d'hydrogène à pression élevée, dans lequel on décompose du peroxyde d'hydrogène à une pression d'au moins 20 bars au moyen d'un catalyseur solide comprenant au moins un élément choisi dans le groupe constitué par le manganèse, le vanadium, le palladium, et leurs mélanges.

2. Procédé selon la revendication 1, **caractérisé en ce que** la pression est d'au moins 80 bars.

3. Procédé selon la revendication 1 ou 2, **caractérisé en ce que** le catalyseur comprend du manganèse et/ou du palladium.

4. Procédé selon la revendication 3, **caractérisé en ce que** le catalyseur comprend du manganèse partiellement oxydé.

5. Procédé selon l'une des revendications 1 à 4, **caractérisé en ce que** le catalyseur est supporté sur un matériau support, inerte dans les conditions de réaction.

6. Procédé selon l'une des revendications 1 à 5, **caractérisé en ce que** le catalyseur est un catalyseur supporté à base de palladium seul ou en mélange avec un ou plusieurs éléments choisis parmi le platine, l'or et l'iridium.

7. Procédé selon l'une des revendications 1 à 6, **caractérisé en ce que** le peroxyde d'hydrogène est sous forme de solution aqueuse.

8. Procédé selon la revendication 7, **caractérisé en ce que** la solution aqueuse contient moins de 90% et de préférence moins de 70% en poids de peroxyde d'hydrogène.

9. Procédé selon la revendication 7 ou 8, **caractérisé en que** la solution est stabilisée.

10. Procédé selon l'une des revendications 1 à 9, pour produire de la chaleur, de l'oxygène et/ou de la vapeur.

11. Dispositif pour réchauffer un équipement (2), comportant
- une chambre de décomposition (1) d'un réactif
• équipée de moyens d'alimentation en peroxyde d'hydrogène (4,6,7,8),
• contenant un catalyseur solide (3) comportant au moins un élément choisi dans le groupe constitué par le manganèse, le vanadium, le palladium et leurs mélanges, et
• ayant une forme apte à coopérer avec celle de l'équipement (2) en vue de le réchauffer; et
- des moyens d'évacuation (11,12) des produits résultant de la décomposition.

12. Dispositif selon la revendication 11, **caractérisé en ce qu'**il comporte en outre des moyens d'injection (13,14,15) d'un fluide de balayage à l'intérieur de la chambre (1) de décomposition.

13. Dispositif selon la revendication 11 ou 12, **caractérisé en ce que** la paroi intérieure de la chambre (1) de décomposition est revêtue d'un matériau résistant à des températures élevées.

14. Dispositif selon l'une des revendications 11 à 13, **caractérisé en ce que** le catalyseur comprend du manganèse et/ou du palladium.

15. Utilisation d'un dispositif selon l'une des revendications 11 à 14, sous une pression d'au moins 20 bars.

16. Utilisation selon la revendication 15, sous une pression d'au moins 80 bars.

## Claims

1. Process for the decomposition of hydrogen peroxide at high pressure, in which hydrogen peroxide is decomposed at a pressure of at least 20 bars using a solid catalyst comprising at least one element selected from the group consisting of manganese, vanadium, palladium and their mixtures.

2. Process according to claim 1, **characterized in that** the pressure is at least 80 bars.

3. Process according to claim 1 or 2, **characterized in that** the catalyst comprises manganese and/or palladium.

4. Process according to claim 3, **characterized in that** the catalyst comprises partially oxidized manganese.

5. Process according to one of claim 1 to 4, **characterized in that** the catalyst is supported on a material support, which is inert under the reaction conditions.

6. Process according to one of claims 1 to 5, **characterized in that** the catalyst is a supported catalyst based on palladium only or in a mixture with one or several elements selected from platinum, gold and iridium.

7. Process according to one of claims 1 to 6, **characterized in that** the hydrogen peroxide is in the form of an aqueous solution.

8. Process according to claim 7, **characterized in that** the aqueous solution contains less than 90% and preferably less than 70% by weight of hydrogen peroxide.

9. Process according to claim 7 or 8, **characterized in that** the solution is stabilized.

10. Process according to one of claims 1 to 9, to produce heat, oxygen and/or steam.

11. Device for heating an equipment (2), comprising:
- a chamber (1) for the decomposition of a reagent
• equipped with means for supplying hydrogen peroxide (4, 6, 7, 8),
• containing a solid catalyst (3) comprising at least one element selected from the group consisting of manganese, vanadium, palladium and their mixtures, and
• having a shape which is able to cooperate with that of the equipment (2) in order to heat it; and
- means for evacuation (11, 12) of the products resulting from the decomposition.

12. Device according to claim 11, **characterized in that** it also comprises means for injection (13, 14, 15) of a flushing fluid inside of the decomposition chamber (1).

13. Device according to claim 11 or 12, **characterized in that** the interior wall of the decomposition chamber (1) is covered with a material which is resistant to high temperatures.

14. Device according to one of claims 11 to 13, **characterized in that** the catalyst comprises manganese and/or palladium.

15. Use of a device according to one of claims 11 to 14, under a pressure of at least 20 bars.

16. Use according to claim 15, at a pressure of under least 80 bars.

## Patentansprüche

1. Verfahren zur Zersetzung von Wasserstoffperoxid bei erhöhtem Druck, in dem das Wasserstoffperoxid bei einem Druck von wenigstens 20 bar mittels eines festen Katalysators zersetzt wird, der wenigstens ein Element umfasst, das aus der Gruppe, bestehend aus Mangan, Vanadium, Palladium und Gemischen derselben, ausgewählt wird.

2. Verfahren nach Anspruch 1, **dadurch gekennzeichnet, dass** der Druck wenigstens 80 bar ist.

3. Verfahren nach Anspruch 1 oder 2, **dadurch gekennzeichnet, dass** der Katalysator Mangan und/oder Palladium umfasst.

4. Verfahren nach Anspruch 3, **dadurch gekennzeichnet, dass** der Katalysator teilweise oxidiertes Mangan umfasst.

5. Verfahren nach einem der Ansprüche 1 bis 4, **dadurch gekennzeichnet , dass** der Katalysator auf einem Trägermaterial getragen wird, das unter den Reaktionsbedingungen inert ist.

6. Verfahren nach einem der Ansprüche 1 bis 5, **dadurch gekennzeichnet , dass** der Katalysator ein Trägerkatalysator auf der Basis von Palladium allein oder im Gemisch mit einem oder mehreren Elementen, ausgewählt unter Platin, Gold und Iridium, ist.

7. Verfahren nach einem der Ansprüche 1 bis 6, **dadurch gekennzeichnet , dass** das Wasserstoffperoxid in Form von wässriger Lösung vorliegt.

8. Verfahren nach Anspruch 7, **dadurch gekennzeichnet, dass** die wässrige Lösung weniger als 90 Gew.-% und vorzugsweise weniger als 70 Gew.-% Wasserstoffperoxid enthält.

9. Verfahren nach Anspruch 7 oder 8, **dadurch gekennzeichnet, dass** die Lösung stabilisiert ist.

10. Verfahren nach einem der Ansprüche 1 bis 9 zur Produktion von Wärme, Sauerstoff und/oder Dampf.

11. Vorrichtung zum Erwärmen einer Anlage (2), umfassend
- eine Kammer zur Zersetzung (1) eines Reaktanten,
• ausgerüstet mit Mitteln zur Einspeisung von Wasserstoffperoxid (4, 6, 7, 8),
• enthaltend einen festen Katalysator (3), der wenigstens ein Element umfasst, das aus der Gruppe, bestehend aus Mangan, Vanadium, Palladium und Gemischen derselben, ausgewählt ist, und
• eine Form aufweisend, die geeignet ist, mit der der Anlage (2), um sie zu erwärmen, zusammenzuwirken; und
- Mittel zur Ausbringung (11, 12) der Produkte, die aus der Zersetzung resultieren.

12. Vorrichtung nach Anspruch 11, **dadurch gekennzeichnet, dass** sie außer dem Mittel zur Injektion (13, 14, 15) eines Spülungsfluids ins Innere der Zersetzungskammer (1) umfasst.

13. Vorrichtung nach Anspruch 11 oder 12, **dadurch gekennzeichnet, dass** die Innenwand der Zersetzungskammer (1) mit einem Material überzogen ist, das gegenüber erhöhten Temperaturen beständig ist.

14. Vorrichtung nach einem der Ansprüche 11 bis 13, **dadurch gekennzeichnet , dass** der Katalysator Mangan und/oder Palladium umfasst.

15. Verwendung einer Vorrichtung nach einem der Ansprüche 11 bis 14 unter einem Druck von wenigstens 20 bar.

16. Verwendung nach Anspruch 15 unter einem Druck von wenigstens 80 bar.
